# EUROPEAN PATENT APPLICATION

(11) **EP 2 324 796 A1**
(43) Date of publication of application: **25.05.2011**
(21) Application number: 09176918.2
(22) Date of filing: 24.11.2009
(51) Int. Cl.: A61C 15/04

(54) **Dental interproximal cleaning device**

(71) Applicant: Niels Madsen Holding ApS, 2800 Kgs. Lyngby (DK)
(72) Inventor: Madsen, Niels, 2800 Kgs. Lyngby (DK)
(74) Representative: Nielsen, Henrik Sten

(57) **Abstract**

By the invention a dental interproximal cleaning device is provided including a handle and a holder, the handle having a proximal end and a distal end, the holder having a base joined to the distal end and a bifurcation forming two branches and a cleaning element extending between the branches of the bifurcation, The cleaning element has a thread element and a brush element, the thread element having a length corresponding at least to the transversal dimension of a tooth or to the transversal dimension of a contact surface between said tooth and an adjacent tooth, and the brush element having a length at least corresponding to one half of the length of the thread element.

## Description

To maintain a good personal dental hygiene, known prior art devices, such as toothbrushes, dental floss and interproximal brushes, may be used, preferably supplemented by regular professional cleaning which typically involves professional removal of dental plaque, both hard and soft, from the surface of the tooth by machine polishing, ultrasound etc., and by hand instruments. Despite the wide availability of devices for cleaning the teeth and the availability of professional cleaning, many people still suffer from caries, gingivitis and other diseases caused by bad dental hygiene. The result of not removing the dental plaque, which is a biofilm on the teeth containing bacteria, and any food debris, which may serve as nutrition for the bacteria, may be caries, gingivitis or other diseases caused by bad dental hygiene Especially the interproximal spaces, which in the context of the present invention is to include both the space between two adjacent teeth and the interproximal surfaces, i.e. the adjacent (mesial and distal) surfaces of two adjacent teeth, are prone to suffer from inadequate cleaning when only a toothbrush is used since the bristles of the toothbrush do not reach into the interproximal spaces to remove food debris from the interproximal spaces and clean the interproximal surfaces. Thus separate cleaning of the interproximal spaces of the teeth is necessary to maintain a good dental hygiene and prevent caries, gingivitis and other dental related diseases.

Common devices for cleaning the interproximal spaces of the teeth include dental floss, toothpicks and interproximal brushes Dental floss comprises a length of thread which is passed between the teeth to clean the interproximal spaces while being held by the user so that one end of the dental floss is held in one hand or wrapped around a finger of one hand, the other end being held by the other hand or being wrapped around a finger of the other hand Although somewhat effective in removing plaque from the teeth, dental floss has numerous drawbacks, such as the tendency to cut into the hands or fingers of the user during use, the inability to reach concave surfaces of the teeth, the risk of cutting into the gums, the need for several different diameters to fit varying interproximal distances, the need for the user to put his fingers into his mouth and the risk of the floss breaking and becoming stuck between the teeth, which cause flossing with dental floss to be difficult, unpleasant and unattractive for many persons Floss wands or floss picks, i.e. where a handle carries a piece of floss strung between two prongs, have mitigated some of the disadvantages mentioned above, but still the dental floss cannot provide cleaning of all the surfaces of the interproximal spaces of the teeth

Toothpicks on the other hand, while being simple and non-expensive are mainly used from the buccal, i.e. the cheek, side of the mouth, and can thus only with great difficulty be inserted from the lingual, i.e. from the tongue, side of the tooth. Thus only partial cleaning of the interproximal spaces of the teeth is achieved with the toothpick. Further, as toothpicks require a certain amount of rigidity to be usable, they cannot be made sufficiently thin for effective use in the interproximal spaces, further a risk of stabbing the gum exists, causing pain and bleeding, which is very unattractive to the user of the toothpick.

On the other hand, a very good cleaning of the interproximal spaces of the teeth is provided by the use of interproximal brushes. These are typically miniature brushes comprising a rigid elongated spine of two or more metallic wires twisted around each other to hold numerous fine nylon bristles between them, the brush being grasped by a small handle in which the spine is attached, and inserted into an interproximal space between two adjacent teeth for removing plaque and food debris Despite being highly effective in reaching all surfaces of the interproximal spaces of the teeth, the use of interproximal brushes is limited due to a number of serious limitations. To be able to be inserted between the teeth, the spine has to be rigid which causes a significant risk of the user of stabbing the gum, or damaging the teeth, with the point, i e the end, of the spine Further, the spine, while requiring a certain thickness to have the necessary rigidity, must also be sufficiently thin to fit in the interproximal spaces of the teeth There is thus a risk of the spine either bending or breaking during use, or having a diameter that is too large to fit in an interproximal space between two teeth. Further, the use of metallic wire to form the spine may result in an unpleasant feeling for the user, and may further damage the teeth due to lever action if the user holding the interproximal brush is disturbed or startled during cleaning To further complicate the use of interproximal brushes they are difficult to use on the back teeth as the handle and the reduced space at the back of the mouth make their insertion difficult and prone to complications as described above.

Attempts to combine the above mentioned devices to achieve an improved cleaning of the interproximal spaces of the teeth are described in amongst others EP1190683, US6250313, US5063948 and US4008727. The reference JP200424371 further includes a holder.

The above-cited documents describe combinations of dental floss with either brushes or enlarged portions of the dental floss. Although an increased cleaning efficiency of the interproximal spaces of the teeth may be achieved, the user still has to grasp the dental floss with his hands resulting in the dental floss cutting into the hands and difficulty in reaching the back teeth, In addition, the holder of JP200424371 is highly complex and thus expensive to manufacture.

It is an object of the present invention to simplify the cleaning of interproximal spaces of teeth

lt is a further object of the present invention to increase the efficiency of cleaning the interproximal spaces of teeth.

It is a further object of the present invention to make the cleaning of interproximal spaces of teeth more convenient.

It is a further object of the present invention to increase the safety for a user cleaning the interproximal spaces of his teeth.

It is a further object of the present invention to provide a device for achieving at least the above-mentioned object.

The above objects, together with numerous other objects, which will be evident from the below detailed description of preferred embodiments of the dental interproximal cleaning device according to the present invention, are according to a first aspect of the present invention obtained by a dental interproximal cleaning device including a handle and a holder
i) the handle having a proximal end and a distal end,
ii) the holder having a base joined to the distal end and a bifurcation forming two branches and a cleaning element extending between the branches of the bifurcation, the cleaning element having a thread element and a brush element, the thread element having a length corresponding at least to the transversal dimension of a tooth or to the transversal dimension of a contact surface between the tooth and an adjacent tooth, and the brush element having a length at least corresponding to one half of the length of the thread elements

The handle may comprise a grip part positioned between the proximal end and the distal end, alternatively the grip part may extend from the proximal end to the distal end. The grip part may be adapted to be grasped by a hand or individual fingers. The handle is typically made from plastic through moulding and may be covered with rubber or similar friction enhancing materials to provide a sure grip for the user. The surface of the handle may further be moulded with a roughened surface or a surface comprising ridges or the like to ensure a sure grip. The handle may further be sculpted to provide contact areas for the individual fingers, i.e. the thumb, index finger etc, of the user's hand to create a handle which is also comfortable to use

The transversal dimension of a tooth typically corresponds to a length of about 8 mm such as for the average molar, a length in the range of 5 to 6 mm such as for premolars/canines and a length in the range of 1 to 3 mm for incisors, however, due to natural variation, the transversal length of a tooth could be in the range of 1 to 15 mm. When the thread element has a length corresponding at least to the transversal dimension of a tooth a cleaning element usable for varying interproximal spaces is achieved The transversal dimension of a contact surface between the tooth and an adjacent tooth is typically about one half or two thirds of the transversal dimension of a tooth When the thread element has a length corresponding to at least the transversal dimension of a contact surface between the tooth and an adjacent tooth a shorter cleaning element is achieved which may be advantageous as it enables a narrower holder.

The length of the thread element could be at least about 0.5 mm, but preferably the thread element has a length suitable for use for all interproximal spaces of the teeth. A thread cleaning element for use both in interproximal spaces of molars as well as interproximal spaces of incisors could be at least 8 mm such as 8 - 30 mm or more preferably 8 - 20 mm. The transversal dimension of a tooth may be used for dimensioning the length of the thread element if there is no contact, and thus no contact surface, between the tooth and an adjacent tooth.

The distance between the branches of the holder should correspond to the length of the cleaning element, however, the holder should fit within the mouth of the user, and thus the holder may vary further in size depending on the user, who may be a child, a woman or a man. A typical distance between the branches of the holder may be about 30 mm, such as from 20 mm to 40 mm, but shorter or longer distances are possible as long as the distance corresponds to the length of the cleaning element and the holder fits in the mouth of the user.

The diameter of the thread element should allow the thread element to be passed between adjacent teeth

The brush element should have a maximum diameter in the range of 1 to 10 mm such as 2-6 mm, and further said diameter should depend on the size of the interproximal space to be cleaned,

The handle should fit the hand or fingers of the hand of the user which may be a child, a woman or a man. Thus the handle may have a variety of dimensions provided that the handle is usable for the user. The size of the handle may for example also vary depending on whether the holder is permanently joined to the handle, in which case the handle may be smaller and for example be gripped by the fingers of one hand, or releasably joined to the handle, in which case a larger handle is typically used for comfort.

In embodiments of the dental interproximal cleaning device according to the first aspect of the present invention the holder may be permanently joined to the handle, or alternatively, the holder may be releasably joined to the handle. A holder permanently joined to the handle may be advantageous for example where the dental interproximal cleaning device according to the present invention is supplied sterilized for professional dental use such as for a dental surgery and any reuse of any part, including the handle, is undesired. Further, the dental interproximal cleaning device may be manufactured at a lower cost when the holder is permanently joined to the handle which may be advantageous for use by users requiring only infrequent cleaning of interproximal spaces of their teeth. It is however preferred that the holder is releasably joined to the handle since it is more economical and environment friendly to exchange only the holder with the cleaning element for frequent users requiring frequent use of the dental interproximal cleaning device according to the present invention. Further, the handle and the holder may be made of different materials including a stainless steel handle and a plastic holder which may allow the handle to be easily sterilized between uses. Further, holders bearing different types of cleaning elements may be used with a single handle to efficiently clean different interproximal spaces. In particular, holders bearing cleaning elements having thread elements of different lengths to fit transversal dimensions of different teeth, such as molars, premolars/canines and incisors, may be used. It is further contemplated within the context of the present invention that the cleaning element could be releasably attached to the holder, so that the cleaning element could be supplied in bulk form such as on a spool, and a suitable length for extending between the branches of the holder could be cut off and fastened to the branches for example by threading the ends of the cleaning element though channels in the branches or by winding the ends of the cleaning element around the branches or pegs provided on the branches. This could be advantageous for dental professionals treating numerous patients as it would be more cost efficient to exchange only the cleaning element. As an alternative to cutting the cleaning element from a continuous length supplied on a spool, single cleaning elements may be provided and be equipped with rings, knots or small beads at the ends for attaching to pegs or for retention by passing through a channel or a notch in the branches having a smaller diameter than the beads or rings, thus making it possible to exchange only the cleaning element. The ends of the cleaning element may also be attached to the branches of the holder through adhesives, by melting and solidifying part of the branches, or by being moulded into the branches, the above methods optionally including rings, knots or small beads on the ends of the cleaning element to increase the strength of the cleaning element/holder joint. When the cleaning element is supplied on a spool, this spool may be located in a depot in the handle from where it may be dispensed and attached to the branches, optionally as a continuous cleaning element where the used cleaning element may be cut off and disposed of or led to another spool in the handle for later disposal

lt is further contemplated within the context of the present invention that the handle could include a toothbrush part, including a head holding bristles, at its proximal end so that the user can brush his teeth with the toothbrush part and clean the interproximal spaces of his teeth with the same dental interproximal cleaning device according to the present invention.

ln further embodiments of the dental interproximal cleaning device according to the first aspect of the present invention the brush element may be provided on one side of the thread element, or alternatively, the cleaning element may include two thread elements, one of which is provided on a first side of the brush element, and the other being provided on a second side of the brush element A brush element provided on one side of the thread element is advantageous as it allows a longer length of a continuous brush for more intense brushing of the interproximal surfaces. On the other hand, when the cleaning element includes two thread elements and the brush element is provided between the thread elements an advantage is achieved as the dental interproximal cleaning device is easy to use both for a right-handed and a left-handed user. Further, the brush element may have an increased effect in removing food debris and other loose material as it can more effectively force such material out of an interproximal space between two adjacent teeth,

In yet further embodiments of the dental interproximal cleaning device according to the first aspect of the present invention the cleaning element may include two brush elements, one of which is provided on a first side of the thread element, and the other being provided on a second side of the thread element, and optionally, one of the brush elements having a first maximum diameter and the other of the brush elements having a second maximum diameter smaller than the first maximum diameter, and preferably, the brush elements having a diameter which varies along the longitudinal dimension of the cleaning element. An advantage of a cleaning element having two brush elements is that the dental interproximal cleaning device is easy to use both for a right-handed and a left-handed user and further is easy to position in the mouth as the thread element is provided close to the middle of the holder which also simplifies the passing of the thread element between adjacent teeth. To increase the versatility of the dental interproximal cleaning device according to the first aspect of the present invention brush elements having differing maximum diameters may be used as this yield the advantage that a user may clean interproximal spaces of varying dimensions without needing to change holder or cleaning element. By using brush elements having a diameter that varies along the longitudinal dimension of the cleaning element, interproximal spaces having a wide variety of dimensions may be cleaned with one cleaning element. It is further contemplated within the context of the present invention that the brush elements may have different properties, such as having bristles of different materials and rigidity, having different construction, or having different coatings, for example a polishing coating on one brush element and a fluoride coating on the other brush element

ln a further embodiment of the dental interproximal cleaning device according to the first aspect of the present invention, the handle has at the distal end a groove for receiving a portion of the base and a retaining element for engaging an indentation in the base. By the use of a groove and a retaining element the holder may be securely and releasably joined to the handle. The retaining element is preferably operable by the user of the dental interproximal cleaning device to selectively release the holder Further methods of releasably joining the holder to the handle include a snap-fit connection, an interference fit connection, a screw, a magnet, a hook and loop connection, a shaft and corresponding aperture in the holder, or a squeezable buckle etc.

ln a further embodiment of the dental interproximal cleaning device according to the first aspect of the present invention the holder is integral with the cleaning element, preferably through moulding of the holder and the cleaning element, The holder and the cleaning element may advantageously be integral, such as by moulding whereby a single-piece holder/cleaning element is obtained which does not include any complicated assembly of individual parts and can be manufactured in high volume at low cost. Thus the holder and the cleaning element may be moulded from a single, preferably plastic, material such as polypropylene, polyethylene terephthalate, polyamide, polyethylene, polytetrafluoroethylene, polyetheretherketone etc.

In embodiments of the dental interproximal cleaning device according to the first aspect of the present invention there may be tension in the cleaning element as it extends between the branches of the holder, or alternatively the cleaning element may extend slackly between the branches of the holder Tension in the cleaning element may result in a greater strength and effectiveness of the brush elements described in embodiments below while less tension or no tension in the cleaning element allows the thread element to more closely conform to the interproximal surfaces.

In a further embodiment of the dental interproximal cleaning device according to the first aspect of the present invention the cleaning element includes two strands twisted around each other and bristles inserted between the strands along a portion of the strands to form the brush element, the remainder of the strands forming the thread element This is advantageous as it allows a simple construction of the cleaning element, further, by using strands the diameter of the spine of the brush element, i.e. the twisted strands fixating the bristles of the brush element, approximates that of the diameter of the thread element, i.e. the twisted strands without bristles, and the resulting cleaning element with brush element may be used also in interproximal spaces of smaller dimensions when compared with a brush having a spine of twisted wires. Further, as the strands may be flexible, the resulting cleaning element including the brush element(s) may be somewhat flexible, thus being easier to pass between adjacent teeth and being more comfortable to use lf more than two strands are used they may be braided instead of twisted analogously to the above. The strands may be made out of a bundle of nylon fibres or a monofilament nylon or Teflon or polyethylene. The cleaning element is preferably tensioned between the branches of the holder o prevent further twisting or bunching up of the twisted strands and to aid fixation of the bristles between the strands

In alternative embodiments of the dental interproximal cleaning device according to the first aspect of the present invention, the cleaning element includes a thread and a wire twisted around a portion of the thread to fixate bristles to the thread to form the brush element, the remainder of the thread forming the thread element, or alternatively the cleaning element includes a thread and bristles affixed by knots, glue or welding to the thread along a portion of the thread to form the brush element, the remainder of the thread forming the thread element By using a twisted wire to fixate the bristles to the thread a stiffening of the brush element may be achieved which may be advantageous for increasing the intensity of brushing in larger interproximal spaces. By fastening the bristles using a wire, knots, glue or welding, stronger monofilament threads such as nylon line or less flexible fibres such as glass fibre or aramid fibres such as Kevlar (registered trademark) fibres, which are not easily twisted or braided, may be used. The wire may be a plastic wire which may additionally be melt bonded to the thread, or may be a metal wire. The cleaning element may be tensioned but may also have little or no tension as the twisted wire stiffens the brush element, and the knots, glue or welding alternatively used to fixate the bristles to the thread may achieve a sufficient fixation of the bristles also when the cleaning element has little or no tension.

In a further embodiment of the dental interproximal cleaning device according to the first aspect of the present invention the thread element may include a thread and the brush element may include two wires twisted around each other to fixate bristles between the wires, one end of the thread element being joined to one end of the brush element. Thus the cleaning element may be provided from two separate parts which are joined, the advantage being a wider choice of materials available for the thread element and the brush element. The cleaning element may be tensioned or not, however, by tensioning the cleaning element the diameter of the wires may be reduced as the brush element achieves a higher rigidity and resistance to breakage through bending by the tensioning of the cleaning element The wires may be plastic wires or metal wires

In an advantageous embodiment of the dental interproximal cleaning device according to the first aspect of the present invention, the cleaning element may include a thread having protrusions along a portion of the thread to form the brush element, the remainder of the thread forming the thread element, the advantage being the possibility of forming the cleaning element in a single step and from a single raw material. The cleaning element may be moulded to include the protrusions, or alternatively the protrusions may be extruded from the thread. The protrusions may form bristles or may alternatively be in the form of thorns or hooks for cleaning the interproximal surfaces, The protrusions may be extruded from the thread by heating the thread in a mould and applying suction through a plurality of channels to force part of the thread material to flow into the channels, thus forming the protrusions. A further advantage is that the cleaning element may be integrally moulded with a holder as described above The cleaning element may be tensioned or not

ln another embodiment of the dental interproximal cleaning device according to the first aspect of the present invention, the cleaning element may include a thread having a moulded jacket along a portion of the thread to form the brush element, and the remainder of the thread forming the thread element. The advantage is that the brush element may be used for polishing the surfaces of the interproximal spaces of the teeth The jacket may typically be made of rubber or plastic, and may further include a polishing agent or an abrasive agent such as pumice. The holder and cleaning element may also be manufactured in a two step moulding process where in a first step a holder is moulded integral with a thread, and in a second step the jacket is moulded onto portions of the thread to form the cleaning element.

In another embodiment of the dental interproximal cleaning device according to the first aspect of the present invention, the cleaning element may include a thread having a moulded jacket along a portion of the thread to form the brush element, the jacket further having protrusions, and the remainder of the thread forming the thread element. The advantage is that the brush element may be cheaply and simply moulded while any thread, for example a non-mouldable thread of increased strength, may be used for the thread element The jacket may typically be made of rubber or plastic. The holder and cleaning element may also be manufactured in a two-step moulding process where in a first step a holder is moulded integral with a thread, and in a second step the jacket is moulded onto portions of the thread to form the cleaning element.

In another embodiment of the dental interproximal cleaning device according to the first aspect of the present invention, the cleaning element may include a thread having a plurality of stacked discs moulded around it along a portion of the thread to form the brush element. The discs may be connected to each other or may be separate from each other. Typically the discs are made of rubber or plastic. The advantage is that the brush element may be cheaply and simply moulded while any thread, for example a non-mouldable thread of increased strength, may be used for the thread element.

Generally, suitable materials for the handle and holder includes metals such as stainless steel, aluminum, titanium and plastic such as polypropylene, polyethylene terephthalate, polyamide, polyethylene, polytetrafluoroethylene, polyetheretherketone etc, possible reinforced with glass fibre or carbon fibre Suitable materials for the cleaning element includes the plastics above as well as fibres of aramide (Kevlar), glass and carbon. When the cleaning element includes bristles these bristles typically include polyamide, the bristles optionally including microfibres or nanofibres. When the cleaning element includes moulded brush elements these brush element may be made of rubber or the plastics above When the cleaning element includes a wire the wire may be a plastic wire or a metal wire.

In another embodiment of the dental interproximal cleaning device according to the first aspect of the present invention the handle may further include:
a battery for storing electrical energy,
an electric motor having an output shaft,
a coupler at the distal end of the handle, the coupler converting kinetic energy from the output shaft of the motor to motion of the cleaning element, and
a switch connected to the battery and the motor and being operable to selectively energise the motor, wherein the motion is selected from the group including reciprocal linear motion along the longitudinal dimension of the cleaning element, mono-directional linear motion along the longitudinal dimension of the cleaning element, transversal motion, rotational motion around the longitudinal dimension of the cleaning element, tilting motion, or combinations thereof.

By providing a motor to cause motion of the cleaning element, the cleaning effectiveness of the dental interproximal cleaning device according to the first aspect of the present invention may be enhanced and the time needed to clean an interproximal space between two adjacent teeth may be shortened The battery is preferably a rechargeable battery such as a nickel metal hydride battery or a lithium ion battery. The motor may be a dc motor but may also be a piezoelectric motor The coupler may include a wheel with a peg connected to a pushrod for converting a rotational motion from the output shaft of the motor to a reciprocal motion of the cleaning element, typically by moving the holder, Alternatively the coupler may include a wheel and the cleaning element may form a closed loop allowing the cleaning element to move in a single direction in tubes in the branches of the holder in a path defined by the wheel of the coupler and the tubes. A further alternatively is where the coupler converts rotational motion from the output shaft of the motor to vibrations to increase the cleaning efficiency of the bristles of the cleaning element.

By combining different motions an increased cleaning efficiency may be achieved For example, rotational motion around the longitudinal dimension of the cleaning element, for achieving an intense loosening of dental plaque or food debris in the interproximal space, may be combined with a reciprocal linear motion along the longitudinal dimension of the cleaning element for efficiently removing the loosened dental plaque or food debris from the interproximal space.

In addition, or as an alternative, to placing the motor and coupler in the handle, rotational motion around the longitudinal dimension of the cleaning element may also be achieved by placing the motor and coupler at the end of one of the branches of the holder so that one end of the cleaning element is coupled to the coupler at the end of one branch, and the other end of the cleaning element is rotatably connected to the end of the other branch

ln addition to cleaning interproximal spaces of the teeth, the dental interproximal cleaning device according to the first aspect of the present invention may be used professionally by a dentist or dental hygienist to apply prophylactic treatments to the surfaces of interproximal spaces of the teeth of a patient by infusing or applying to the cleaning element a suitable agent, such as fluoride lacquer, and thereafter treating the interproximal spaces. Other suitable agents include toothpaste, polishing agents and disinfecting agents. The thread element of the cleaning element may comprise a metal wire or a Kevlar wire, and the cleaning element may be autoclavable if reusable. Further the brush element may comprise a rubber cylinder moulded onto or threaded onto a portion of the thread of the thread element The rubber cylinder may include or be coated with a suitable agent as described above.

An advantage of the dental interproximal cleaning device according to the first aspect of the present invention is that it achieves the efficiency of the previously difficult to use interproximal brush and is easily positioned and cleans the interproximal spaces of the teeth without any risk of injury to the teeth or gums. Further, by providing tension in the cleaning element, a brush element may be more easily and securely used in interproximal spaces.

A further advantage of the dental interproximal cleaning device according to the first aspect of the present invention is that it achieves a more efficient cleaning of the interproximal spaces of the teeth, also in the back of the mouth

Another advantage of the dental interproximal cleaning device according to the first aspect of the present invention is that it is convenient to use requiring only one hand for operation.

In a second aspect of the present invention a holder of the dental interproximal cleaning device according the first aspect of the present invention is provided.

The holder may further be adapted to be used with conventional reciprocating electric toothbrushes

ln a third aspect of the present invention a cleaning element of the dental interproximal cleaning device according to the first aspect of the present invention is provided,

In a fourth aspect of the present invention a method of cleaning an interproximal space of adjacent teeth is provided comprising the steps of:
providing a dental interproximal cleaning device according to the first aspect of the present invention
inserting the thread element into the interproximal space, and
moving the cleaning element so as to cause the brush element to enter, and thereby clean, the interproximal space.

The method according to the fourth aspect of the present invention provides efficient cleaning of an interproximal space of adjacent teeth without the risk of injury to the gums.

The invention and its many advantages will be described in more detail below with reference to the accompanying schematic drawings, which for the purpose of illustration show some non-limiting embodiments and in which
Fig 1 shows a dental interproximal cleaning device comprising a handle with attached holder together with further detached holders according to an embodiment of the present invention.
Fig 2 shows different embodiments of the cleaning element according to the present invention.
Fig 3 shows different embodiments of the construction of the cleaning element according to the present invention

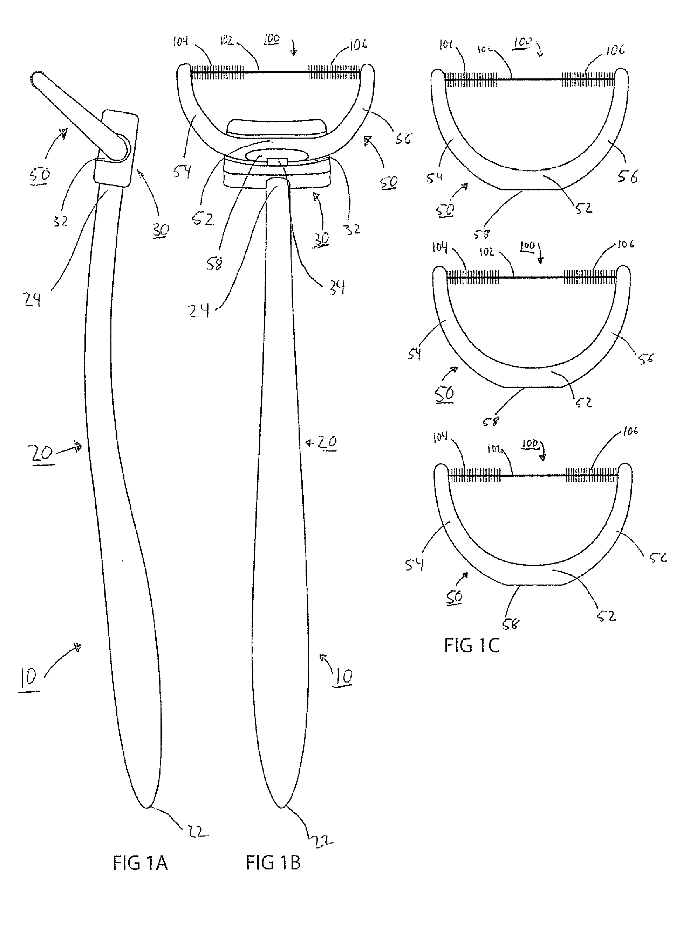

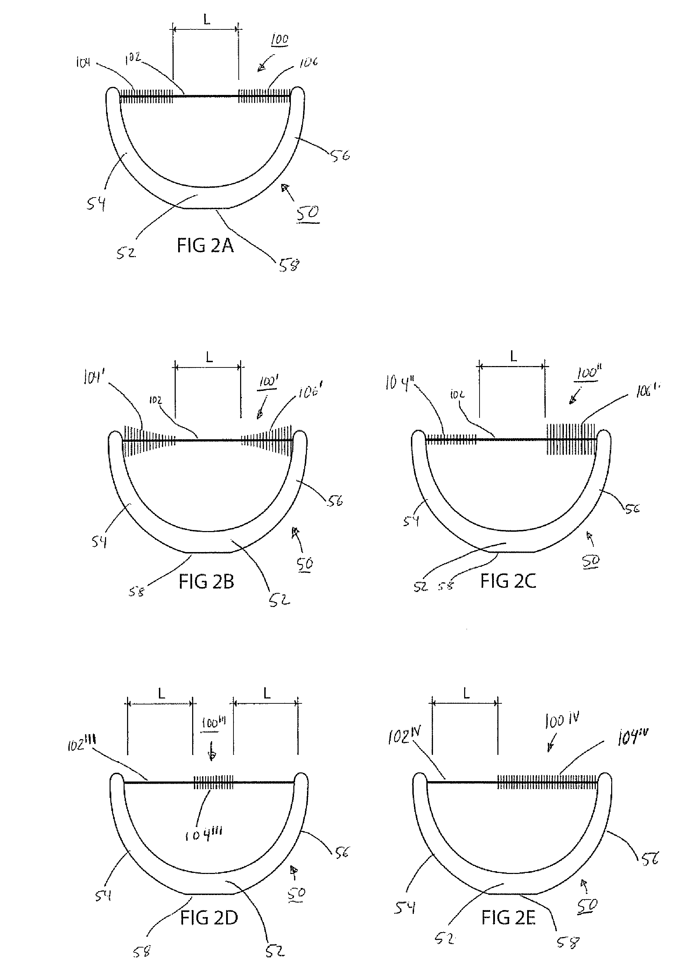

Fig 1A shows a side view of a dental interproximal cleaning device, in its whole designated the reference numeral 10, according to one embodiment of the present invention. The dental interproximal cleaning device includes a handle, in its whole designated the reference numeral 20, a holder, in its whole designated the reference numeral 50 and a cleaning element, in its whole designated the reference numeral 100. The handle 20 is shaped to be easily grasped by the hand or a plurality of individual fingers of a user and has a first end, designated the reference numeral 22 and a second end, designated the reference numeral 24, joined to a head part, in its whole designated the reference numeral 30 The head part 30 has a groove, designated the reference numeral 32, for interengagement with the holder 50, and a retaining element, designated the reference numeral 34, which is shown in Fig 1B which shows a plan view of the dental interproximal cleaning device 10. The holder 50 includes a base, designated the reference numeral 52, and has an indentation, designated the reference numeral 58 in the base 52 for interengagement with the retaining element 34 in the head 30. The holder 50 further includes a bifurcation forming first and second branches, designated the reference numerals 54 and 56 respectively, which support the cleaning element 100. The cleaning element 100 includes a thread element, designated the reference numeral 102, and first and second brush elements, designated the reference numeral 104 and 106 respectively, the ends of the cleaning element 100 being attached to the first and second branches 54 and 56 by for example moulding or adhesives. Due to the grove 32, the retaining element 34, and the indentation 58 in the base 52 of the holder 50, the holder 50 may be attached or detached from the head part 30 as desired, such as for replacing the holder 50, when the cleaning element 100 has worn out and is no longer effective, with a replacement holder, such as shown in fig 1C where three holders are shown, or alternatively for replacing the holder 50 with a holder bearing a different kind of cleaning element as will be described in fig 2 below. The retaining element 34 may be biased to engage the indentation 58 by a spring in the handle 20, or may alternatively be static where instead the material of the head part 30 flexes resiliently as the base 52 of the holder 50 is inserted into the groove 32.

Fig 2 shows different embodiments of the cleaning element according to the present invention. Fig 2A shows the same cleaning element 100 as shown in fig 1 The thread element 102 has a length, designated L, which corresponds at least to the transversal dimension of a tooth or to the transversal dimension of a contact surface between said tooth and an adjacent tooth (not shown). In use the thread element 102 may be positioned between two adjacent teeth whereby cleaning of the interproximal space of the teeth is accomplished initially as the thread element 102 is passed between the teeth towards the gums and subsequently by moving the cleaning element 100 reciprocally or non-reciprocally along the longitudinal dimension of the cleaning element 100 to cause the first and second brush elements 104 and 106 to enter and exit the interproximal space repeatedly, thereby removing food debris from the interproximal space and cleaning the interproximal surfaces of the adjacent teeth.

In fig 2B a second embodiment of a cleaning element, designated the reference numeral 100^{I}, is shown, the difference being a first and second brush element, designated the reference numeral 104^{I} and 106^{I} respectively, which are of varying diameter along the length of the cleaning element 100^{I}*,* and more particularly as shown in fig 2B, cone-shaped., The cleaning element 100^{I} may advantageously be used where the user of the dental interproximal cleaning device 10 has varying interproximal spaces between different pairs of his teeth

Also the third embodiment of the cleaning element, designated the reference numeral 100^{II}, in fig 2c, is advantageous for cleaning interproximal spaces of varying dimensions, by virtue of first and second brush elements, designated the reference numerals 104^{II} and 106^{II} respectively, which are of different maximum diameter

In fig 2D a fourth embodiment of the cleaning element, designated the reference numeral 100^{III}, is shown In cleaning element 100^{III}, the second brush element is omitted resulting in a single first brush element, designated the reference numeral 104^{III} which is positioned in between two thread elements, one of which is designated the reference numeral 102^{III}, resulting in a cleaning element 100^{III} which is advantageous for smaller interproximal spaces, or where the user wishes to also use the dental interproximal cleaning device for flossing

In fig 2E a fifth embodiment of a cleaning element, designated the reference numeral 100^{IV} is shown. In cleaning element 100^{IV}, the second brush element is omitted and a lengthened first brush element, designated the reference numeral 104^{IV}, is positioned on one side of a thread element, designated the reference numeral 102^{IV}

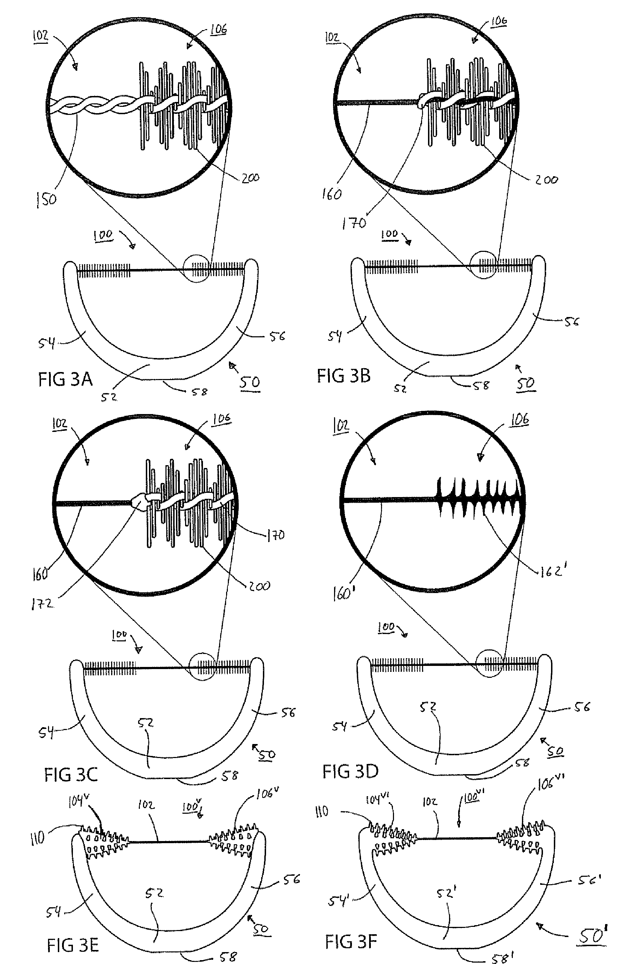

The cleaning element with brush element and thread element may be constructed as described below with reference to fig 3.

In fig 3A the cleaning element 100 is constructed using two strands, one of which is designated the reference numeral 150, which are twisted around each other to form the thread element 102. Prior to twisting of the strands 150, bristles, one of which is designated the reference numeral 200, are inserted between the strands 150 along portions of the strands corresponding to the first and second brush element, the bristles being fixated and arranged into a brush by the twisting of the strands 150. The part of the twisted strands 150 which do not include bristles thus form the thread element 102. Accordingly, the brush elements 104 and 106 are integral with the thread element

Another construction of the cleaning element 100 is shown in fig 3B where two wires, one of which is designated the reference numeral 170, having bristles 200 inserted between them, are twisted around portions corresponding to the first and second brush elements 104 and 106, of a central thread, designated the reference numeral 160, to form the cleaning element including thread element 102 corresponding to the portion of the thread 160 which is not surrounded by the twisted wires 170. The thread 160 may be a single filament but may also be a braided or twisted thread.

In fig 3C the brush element 106 comprises two twisted wires 170 with bristles 200 inserted between them. The wires 170 are terminated in an anchoring element, designated the reference numeral 172, to which the thread end of the thread 160 is fastened. The cleaning element 100 in fig 3C is thus constructed from separate first and second brush elements 104 and 106 which are joined by the thread 160 thus forming the cleaning element 100. The anchoring element 172 may a ball of solder, plastic or glue, or can alternatively be a moulded plastic or metal part having apertures for inserting the ends of the wires 170.

A further variant of constructing the cleaning element 100 is shown in fig 3D where an alternative thread, designated the reference number 160^{I} is used Thread 160^{I} is preferably made from a thermoplastic material and as such may be fashioned with protrusions, one of which is designated the reference numeral 162^{I}, which are similar in function and appearance to the bristles 200 shown in figs 3A-3C, but are integral with the thread 160^{I}. The thread element shown in fig 3D may be formed in one piece by moulding Alternatively, the protrusions 102^{I} may be formed through extrusion from the thread 160^{I}. The protrusions 162^{I} may alternatively be moulded onto the thread 1601 when the thread 160^{I} and the protrusions 162^{I} are made from different materials, or when the thread is made from a non-thermoplastic material

ln fig 3E, a cleaning element, designated the reference number 100^{V} is shown where first and second brush elements, designated the reference numerals 104^{V} and 106^{V} respectively, are moulded to include protrusions, designated the reference numeral 110, and are moulded around a portion of the thread element 102, or are moulded to include a channel through which a portion of the thread element can pass, to form a cleaning element 100^{V}. Typically, the material used for the brush elements may be rubbers

Yet a possibility of constructing the a cleaning element is shown in fig 3F wherein a holder, designated the reference numeral 50^{I}, is moulded from a plastic material integrally with first and second brush elements, designated the reference numerals 104^{VI} and 106^{VI} respectively, including protrusions, one of which is designated the reference numeral 110, and the thread element 102 so that the thread element 102 is moulded from the same plastic material as the holder 50^{I} and the brush elements 104^{VI} and 106^{VI}, possibly including a reinforcing fibre extending between the brush elements to reinforce the thread element, resulting in a single-piece combined holder/cleaning element.

### List of parts with reference to the figures

| | |
|---|---|
| 10. | Dental interproximal cleaning device |
| 20. | Handle |
| 22. | First end |
| 24. | Second end |
| 30 | Head part |
| 32 | Groove |
| 34 | Retaining element |
| 50 | Holder |
| 50^{I} | Holder (alternative embodiment) |
| 52. | Base |
| 52'. | Base (alternative embodiment) |
| 54 | First branch |
| 54^{I} | First branch (alternative embodiment) |
| 56 | Second branch |
| 56^{I} | Second branch (alternative embodiment) |
| 58. | Indentation |
| 88^{I} | Indentation (alternative embodiment) |
| 100 | Cleaning element |
| 100^{I} | Cleaning element (second embodiment) |
| 100^{II}. | Cleaning element (third embodiment) |
| 100^{III}. | Cleaning element (fourth embodiment) |
| 100^{IV} | Cleaning element (fifth embodiment) |
| 100^{V} | Cleaning element (sixth embodiment) |
| 100^{VI}. | Cleaning element (seventh embodiment) |
| 102. | Thread element |
| 102^{III}. | Thread element (fourth embodiment) |
| 102^{IV}. | Thread element (fifth embodiment) |
| 104 | First brush element |
| 104^{I} | First brush element (second embodiment) |
| 104^{II} | First brush element (third embodiment) |
| 104^{III} | First brush element (fourth embodiment) |
| 104^{IV} | First brush element (fifth embodiment) |
| 104^{V}. | First brush element (sixth embodiment) |
| 104^{VI} | First brush element (seventh embodiment) |
| 106. | Second brush element |
| 106^{I}. | Second brush element (second embodiment) |
| 106^{II}. | Second embodiment (third embodiment) |
| 106^{V}. | Second brush element (sixth embodiment) |
| 106^{VI}. | Second brush element (seventh embodiment) |
| 110. | Protrusion |
| 150. | Strand |
| 160. | Thread |
| 160^{I} | Thread (alternative embodiment) |
| 162^{I} | Protrusion |
| 170 | Wire |
| 172 | Anchoring element |
| 200. | Bristle |

## Claims

1. A dental interproximal cleaning device including a handle and a holder
i) said handle having a proximal end and a distal end,
ii) said holder having a base joined to said distal end and a bifurcation forming two branches and a cleaning element extending between said branches of said bifurcation, said cleaning element having a thread element and a brush element, said thread element having a length corresponding at least to the transversal dimension of a tooth or to the transversal dimension of a contact surface between said tooth and an adjacent tooth, and said brush element having a length at least corresponding to one half of said length of said thread element

2. The dental interproximal cleaning device according to claim 1, said holder being permanently joined to said handle, or alternatively, said holder being releasably joined to said handle.

3. The dental interproximal cleaning device according to claims 1-2, said brush element being provided on one side of said thread element, or alternatively, said cleaning element including two thread elements, one of which is provided on a first side of said brush element, and the other being provided on a second side of said brush element,

4. The dental interproximal cleaning device according to claims 1-2, said cleaning element including two brush elements, one of which is provided on a first side of said thread element, and the other being provided on a second side of said thread element, and optionally, one of said brush elements having a first maximum diameter and the other of said brush elements having a second maximum diameter smaller than said first maximum diameter, and preferably, said brush elements having a diameter which varies along the longitudinal dimension of said cleaning element.

5. The dental interproximal cleaning device according to any of the claims 2-4, said handle having at said distal end a groove for receiving a portion of said base and a retaining element for engaging an indentation in said base

6. The dental interproximal cleaning device according to any of the claims 1-5, said holder being integral with said cleaning element, preferably through moulding of said holder and said cleaning element.

7. The dental interproximal cleaning device according to any of the claims 1-6, said cleaning element including two strands twisted around each other and bristles inserted between said strands along a portion of said strands to form said brush element, the remainder of said strands forming said thread elements

8. The dental interproximal cleaning device according to any of the claims 1-6, said cleaning element including a thread and a wire twisted around a portion of said thread to fixate bristles to said thread to form said brush element, the remainder of said thread forming said thread element, or alternatively, said cleaning element including a thread and bristles affixed by knots, glue or welding to said thread along a portion of said thread to form said brush element, the remainder of said thread forming said thread element.

9. The dental interproximal cleaning device according to any of the claims 1-6, said thread element including a thread and said brush element including two wires twisted around each other to fixate bristles between said wires, one end of said thread element being joined to one end of said brush element.

10. The dental interproximal cleaning device according to any of the claims 1-6, said cleaning element including a thread having protrusions along a portion of said thread to form said brush element, the remainder of said thread forming said thread element

11. The dental interproximal cleaning device according to claim 10, said cleaning element being moulded to include said protrusions, or alternatively said protrusions being extruded from said thread

12. The dental interproximal cleaning device according to any of the claims 1-6, said cleaning element including a thread having a moulded jacket along a portion of said thread to form said brush element, said jacket further having protrusions, and the remainder of said thread forming said thread element.

13. The dental interproximal cleaning device according to claim 2 and any of the claims 3-12 depending from claim 2, said handle further including:
a battery for storing electrical energy,
an electric motor having an output shaft,
a coupler at said distal end of said handle, said coupler converting kinetic energy from said output shaft of said motor to motion of said cleaning element, and
a switch connected to said battery and said motor and being operable to selectively energise said motor, wherein said motion is selected from the group including reciprocal linear motion along the longitudinal dimension of said cleaning element, mono-directional linear motion along the longitudinal dimension of said cleaning element, transversal motion, rotational motion around the longitudinal dimension of said cleaning element, tilting motion, or combinations thereof.

14. The holder of the dental interproximal cleaning device according to claim 2 and any of the claims 3-13 depending from claim 2.

15. The cleaning element of the dental interproximal cleaning device according to claim 2 and any of the claims 3-13 depending from claim 2.
